# EUROPEAN PATENT SPECIFICATION

(11) **EP 2 758 499 B1**
(45) Date of publication and mention of the grant of the patent: **21.12.2016**
(21) Application number: 11773696.7
(22) Date of filing: 22.09.2011
(51) Int. Cl.: C10L 3/00, C10L 3/10, C09K 8/52, B01D 53/00

(54) **REGENERATION OF KINETIC HYDRATE INHIBITOR**
REGENERIERUNG EINES KINETISCHEN HYDRATINHIBITORS
RÉGÉNÉRATION D'INHIBITEUR CINÉTIQUE D'HYDRATE

(43) Date of publication of application: 30.07.2014
(73) Proprietor: Statoil Petroleum AS, 4035 Stavanger (NO)
(72) Inventor: KAASA, Baard, 3612 Kongsberg (NO); HEMMINGSEN, Pål Viggo, N-Stavanger 4035 (NO)
(74) Representative: Jackson, Robert Patrick
(86) International application number: PCT/EP2011/066519
(87) International publication number: WO 2013/041143

(56) References cited:
- WO-A1-2006/110192
- WO-A1-2007/073204
- WO-A2-2010/084323
- US-A- 5 936 040
- US-A1- 2005 072 663

## Description

### FIELD OF THE INVENTION

The invention concerns a method and system for regeneration of kinetic hydrate inhibitor (KHI) when it is used without a thermodynamic hydrate inhibitor (THI).

### BACKGROUND OF THE INVENTION

Previously, kinetic hydrate inhibitors have been used together with a thermodynamic inhibitor (normally a glycol, typically monoethylene glycol - MEG). A process for regeneration of both the thermodynamic glycol, and one or more kinetic inhibitors (while both the thermodynamic and the kinetic inhibitors are in a mixture) has been proposed by ExxonMobil, WO 2006/110192 A1. This patent application describes, in general, a distillation system where water and glycol are separated in a distillation column. Use of thermodynamic inhibitors requires large regeneration units with distillation columns to separate the thermodynamic inhibitor from the aqueous phase. If one adds a KHI to such a loop, the KHI follows the MEG through the system, and there is otherwise no change in the process compared to traditional regeneration processes of THI without KHI. The addition of KHI makes it possible to use lower MEG concentrations. Otherwise, the ExxonMobil system is identical to a standard MEG loop. The system is otherwise not changed if a combination of a thermodynamic and a kinetic inhibitor is used, and KHI is subsequently not regenerated from the MEG.

Kinetic inhibitors are used to prevent hydrate formation during transport of hydrocarbons in presence of water. The kinetic inhibitor is added in low concentrations, typically 0.25-5 wt%. Still, this is an expensive solution and it results in higher discharge of chemicals to the environment, so regeneration of the KHI would be beneficial both for economical and environmental reasons.

### SUMMARY OF THE INVENTION

Therefore, it is an object of the invention to provide a method and system for regenerating kinetic hydrate inhibitor which is more economic.

This object is solved with a method and system according to the independent claims. Advantageous further developments are subject of the dependent claims.

At present, there is no process for regeneration and reuse of the kinetic inhibitor alone and it is therefore continuously discharged with the produced water.

At present there is a need within the field to effectively prevent hydrate formation during transport of hydrocarbons in the presence of water, while at the same time use less hydrate inhibitor and to do so in a cost effective, energy efficient, compact and environmentally responsible manner and using less chemicals.

The present invention takes a much different approach and starting point than the prior art. The present invention eliminates the need to use MEG, i.e., transport of the aqueous phase can be conducted without the use of a thermodynamic hydrate inhibitor. This is made possible by the use of kinetic hydrate inhibitor only. This new process is thus not a MEG reclamation process, which also recycles KHI - such as shown in the prior art, rather, a process of recovery of KHI when used without added MEG.

The present invention is related to regeneration of the kinetic inhibitor in systems where it is used without a thermodynamic inhibitor. In addition, this new method and system would require only one evaporation step, whereby the heat required for the evaporation step can be supplied from a heat exchanger. Thus it is not necessary to include a distillation column and this makes the equipment much more compact. The inclusion of heat regeneration from a heat exchanger can thus reduce the energy consumption of the process by more than 90%.

A first aspect of the present invention relates to a method for the regeneration of kinetic hydrate inhibitor used as the sole hydrate inhibitor type, i.e. without the presence of thermodynamic hydrate inhibitor, in a hydrate inhibitor regeneration system, comprising the following steps wherein:
i) a stream containing a mixture of water and kinetic hydrate inhibitor as the sole hydrate inhibitor type, is fed into a flash separator from a feed line;
ii) the water in the flash separator is boiled, i.e. without the use of a distillation column or tower, with heat supplied in an external circulation loop with an external heat exchanger, and escapes as vapor;
   or by means of an internal heat exchanger or heating coils located inside the flash separator;
iii) kinetic hydrate inhibitor is concentrated in the flash separator and in the circulation loop whereby the kinetic hydrate inhibitor, can be re-used.

A second aspect of the present invention relates to the method of the first aspect, wherein heat can be supplied to the flash separator by means of an internal heat exchanger or heating coils located inside the flash separator.

A third aspect of the present invention relates to the method of the first or second aspect, wherein the vapor is further heated by compression in a compressor or fan, transferred by means of a vapor conduit and condensed in the external heat exchanger and the heat produced by the condensing vapor is used to heat and evaporate the water in the circulation loop and the separator.

A fourth aspect of the present invention relates to a system for the regeneration of kinetic hydrate inhibitor used as the sole hydrate inhibitor type, i.e. without the presence of thermodynamic hydrate inhibitor, wherein the system is comprised of the following:
i) a feed line for feeding water and kinetic hydrate inhibitor into a flash separator;
ii) an outlet line leading from the flash separator to a pump and a slip stream for withdrawal of regenerated kinetic hydrate inhibitor;
iii) a vapor line for guiding evaporated water vapor from the flash separator, i.e. without the use of a distillation column or tower, to a condenser, and a line connecting a downstream side of the condenser to a condenser drum;
iv) either a line provided downstream of the pump to connect the pump to an external heat exchanger, and a return line leading from the heat exchanger to the flash separator; or an internal heat exchanger or heating coils placed inside the flash separator; wherein said system does not include a distillation column.

A fifth aspect of the present invention relates to the system of the fourth aspect, wherein an internal heat exchanger or heating coils are placed inside the flash separator.

A sixth aspect of the present invention relates to the system of the fourth or fifth aspect, wherein the vapor line for evaporated water vapor from the flash separator is in fluid communication with a compressor or fan, followed by a heat exchanger, a condenser drum with two outlets to either a vacuum pump or a pump for warm condensed water, whereby the warm condensed water is in heat exchange contact with inlet streams, and the return line which is located downstream from the heat exchanger and upstream from the flash separator.

A seventh aspect of the present invention relates to the use of the method of the first to third aspect or to a system of the fourth to sixth aspect, for preventing hydrate formation during transport of hydrocarbons in the presence of water.

### BRIEF DESCRIPTION OF THE FIGURES

Preferred embodiments of the present invention will now be illustrated in more detail with reference to the accompanying figures, in which:
**Figure 1** is a principal drawing of the process according to an embodiment of the invention;
**Figure 2** is a detailed process description without heat regeneration according to the embodiment shown in Figure 1;
**Figure 3** is an illustration of a re-boiler with internal heating according to another embodiment of the invention, and
**Figure 4** shows a process of regeneration of kinetic inhibitor with heat regeneration according to another embodiment of the invention.

### DETAILED DESCRIPTION OF THE INVENTION

Hydrate is a solid form of water formed at high pressure in presence of light gas molecules normally found in hydrocarbon gases and liquids. Hydrates form a crystalline phase, similar to ice, and may potentially plug flow lines and production equipment. A typical example is the transport of hydrocarbons (gas and/or liquid) in a pipeline in which the temperature drops due to cold surroundings (sea, water or cold air). A water phase may be present at all times or water may condense as the temperature drops. At high pressure and low temperature, the water may form hydrates stabilized by the light gas molecules in the hydrocarbon phase.

The traditional method to prevent hydrate formation has been by adding a thermodynamic hydrate inhibitor. The thermodynamic inhibitor works essentially by diluting the water and thereby reducing the hydrate formation temperature. The amount of inhibitor added depends on the necessary degree of protection, but typically it is 30-70 wt%. Typical thermodynamic hydrate inhibitors are alcohols such as methanol and ethanol and glycols such as monoethylene glycol (MEG), diethylene glycol (DEG) and triethylene glycol (TEG). Thermodynamic inhibitors are either added batchwise or continuously. In systems with continuous addition of thermodynamic inhibitors, the inhibitor is normally regenerated and reused. This is done in a distillation process where it is separated from water and re-concentrated to a desired concentration.

Kinetic hydrate inhibitors are polymer based chemicals that will delay the formation of hydrates, in some cases up to several days. Typical concentration levels are 0.25-5 wt%, but inhibition maybe improved by increasing the concentration. Kinetic inhibitors are not regenerated and are simply discharged with the produced water.

Specific elements in this invention which are new:
Regeneration of kinetic hydrate inhibitor when it is used without a thermodynamic inhibitor can yield the following major improvements:
   - A distillation column is not necessary which significantly reduces the equipment size.
   - Heat integration of the regeneration process leading to very low energy consumption.

Advantages and improvements achieved by this invention:
At present, kinetic hydrate inhibitors used without a thermodynamic inhibitor are not regenerated. With the present invention, most of the inhibitor may be regenerated and reused. This will:
   - Reduce environmental impact because the chemical substance is not discharged with the produced water.
   - Allow for use of higher concentration and still reduced cost and environmental impact.
   - Reduce the cost of buying new chemicals.

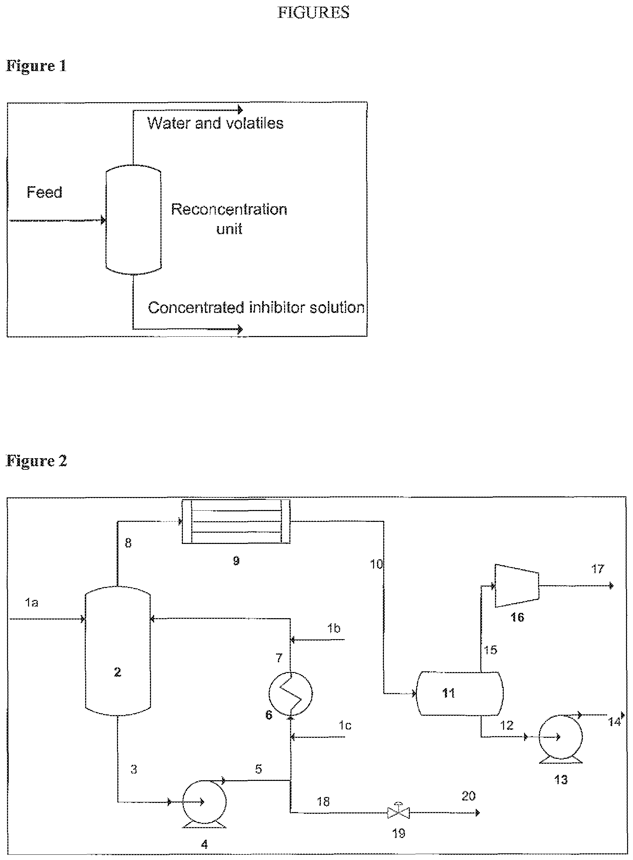

In the present invention, the kinetic inhibitor is regenerated by concentrating it in a re-boiler type unit. A principal drawing is shown in Figure 1. More detailed drawings and explanations of the process are given further below in this description. The produced water stream is fed to a boiler where water is boiled off. The kinetic hydrate inhibitor is a large polymer molecule that has very low vapor pressure. It will not evaporate, but accumulates in the aqueous phase in the re-boiler. Typical examples of kinetic hydrate inhibitor may include poly-(vinylpyrrolidone) (PVP), or poly-(vinylcaprolactam) (PVCap) or co-polymers of vinylpyrrolidone or vinylcaprolactam, where the polymer lengths can be variable. Numerous other kinetic hydrate inhibitors are well documented.

In the preferred embodiment, the kinetic hydrate inhibitor would have PVP or PVCap functional groups. It is also possible to use mixtures of mentioned compounds depending on operating conditions. When it reaches the desired concentration or the solubility limit, a slip stream is taken out from the re-boiler. The slip stream is concentrated with respect to the inhibitor and is ready for reuse. Due to possible accumulation of impurities, a fraction of the re-concentrated solution may be wasted. Some loss of the kinetic inhibitor should be expected and an addition of some fresh chemical may be necessary. The re-concentrated solution may be pumped back into the pipeline in a separate pipeline or transported in tanks by boat, train or road.

Figure 2 shows a more detailed process description. The aqueous phase containing the kinetic inhibitor is fed to a flash separator 2 through a feed line to one of the alternative locations 1a, 1b or 1c. The feed, which is mainly water containing the KHI can have a range of temperature from -5°C to +40°C depending if it comes directly from the pipeline or if there has been some sort of pretreatment, for example separation and/or filtration. It is fed at one of the feed points 1a, 1b or 1c. The flash separator 2 is partly liquid filled and the liquid is circulated via an outlet line 3, a circulation pump 4, a line 5, and a heat exchanger 6. The outlet line 3 is exits the flash separator 2 at its bottom section, preferably at the lowermost location of the flash separator 2. Downstream of the outlet line 3, the circulation pump 4 is provided for pumping the circulation stream. The line 5 is provided downstream of the circulation pump 4 in order to connect the circulation pump 4 with the heat exchanger 6, in which the water is heated before it returns to the flash separator 2 via a return line 7. The way it is added is by circulating the water from the boiler 2 using a pump 4 through a heat exchanger 6 and back in. Typically, the circulation rate will be 10-100 times larger than the feed rate. Heat in the heat exchanger 6 can be supplied, by way of a feed line and return line for heating medium (not shown), whereby the hot heating medium is water or oil or steam. When the temperature of the liquid in the flash separator 2 reaches the boiling point, water will escape the flash separator 2 as vapor through a vapor line 8. The amount of heat added by the heat exchanger 6 determines how much water is evaporated which in turn determines the feed rate in the feed line, in order to keep the liquid level inside the flash separator 2 constant. An altemativ regulation method is to set the rate of feed 1 to a desired rate and adjust the amount of heat supplied in the heat exchanger 6 to regulate the level in the separator 2. If level is increases above the target level, more heat is added and more water will then evaporate to bring the level down. If the level is too low, less heat can be added and less water will evaporate and level will increase.

The vapor in the vapor line 8 is fed to a condenser 9 where it is cooled and condensed to water which exits as stream 10 to a condenser drum 11. The stream 10 may contain a gas phase depending on the degree of cooling in the condenser 9 and possible presence of other volatile components and gases. The condensed water is pumped via a line 12 to a pump 13 and is then discharged or sent to further water treatment through a discharge line 14. Noncondensables will leave the condenser drum through a line 15. To reduce the boiling temperature in the system, a vacuum pump 16 could be installed to keep the flash separator at reduced pressure. The discharge from the vacuum pump 16 is sent to an open/closed vent or back into the process.

The kinetic hydrate inhibitor will not evaporate in the flash separator 2 and will therefore accumulate in the circulating liquid exiting the flash separator 2 via outlet line 3. A slip stream 18 may therefore be withdrawn or branched-off from the flash separator 2 downstream of the outlet line 3, preferably in between the circulation pump 4 and the heat exchanger 6, by a regulation valve 19 to produce the regenerated inhibitor stream 20 which can then be reused. Preferably, the regulation valve 19 is provided in a line which is branched-off from line 5.

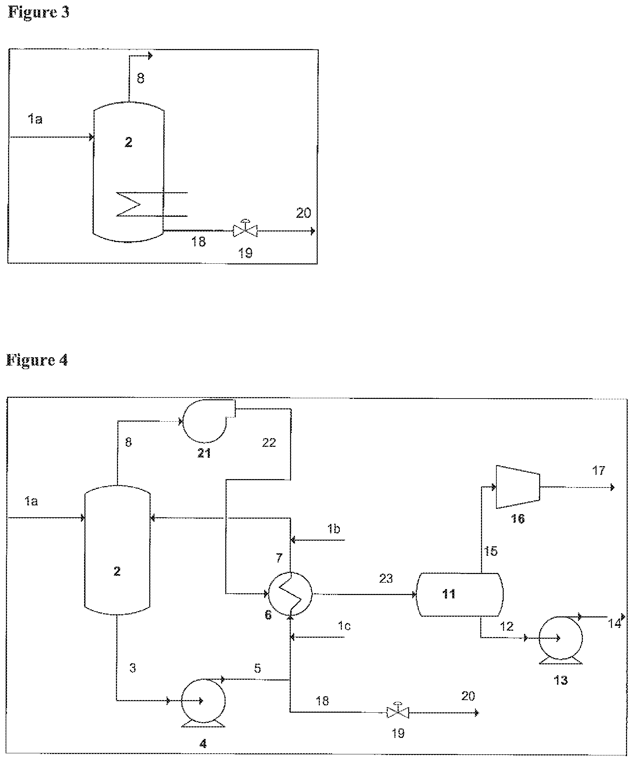

In Figure 2, the heat for boiling is supplied in an external circulation loop with an external heat exchanger 6 which means that the heat exchanger is provided outside of the vessel of the flash separator 2. The necessary heat may alternatively be added by an internal heat exchanger or heating coils as shown in Figure 3. This is just a practical/mechanical difference and does not change the composition of any of the product streams or the overall energy consumption.

Figure 4 shows how it is possible to heat integrate the boiler by utilizing the heat from the condensing vapor. The vapor 8 from the flash separator is slightly compressed in a compressor or fan 21. The purpose of compression is to increase the dew point temperature. Compression will also heat the vapor. A vapor conduit 22 guides the hot vapor to the heat exchanger 6 in which the hot vapor is then condensed and this supplies the necessary heat to evaporate the water in the flash separator. The condensed water 23 is collected in the condenser drum 11.

In both cases, the condensed water discharged by the discharge line 14 will be quite hot and can be used in a process-process heat exchanger to heat up the feed stream la-c.

Although the foregoing invention has been described in some detail by way of illustration and example for purposes of clarity of understanding, it will be readily apparent to those of ordinary skill in the art in light of the teachings of this invention that certain changes and modifications may be made thereto without departing from the scope of the appended claims.

While the invention has been illustrated and described in detail in the drawings and foregoing description, such illustration and description are to be considered illustrative or exemplary and not restrictive and it is not intended to limit the invention to the disclosed embodiments. The mere fact that certain measures are recited in mutually different dependent claims does not indicate that a combination of these measures cannot be used advantageously. Any reference signs in the claims should not be construed as limiting the scope of the invention.

## Claims

1. Method for regenerating kinetic hydrate inhibitor used as the sole hydrate inhibitor type in a hydrate inhibitor regeneration system, comprising the following steps:
i) feeding a stream containing a mixture of water and kinetic hydrate inhibitor into a flash separator (2) from a feed line;
ii) boiling the water in the flash separator (2) with heat supplied in an external circulation loop (3, 5, 7) with an external heat exchanger (6), or with heat supplied by means of an internal heat exchanger (6) or heating coils located inside the flash separator (2); and discharging the evaporated water from the flash separator (2) as vapour (8);
iii) concentrating a kinetic hydrate inhibitor in the flash separator (2) and in the circulation loop (3, 5, 7), whereby the kinetic hydrate inhibitor can be re-used.

2. Method according to claim 1 comprising the step of supplying heat to the flash separator (2) by means of an internal heat exchanger (6) or heating coils located inside the flash separator (2).

3. Method according to claim 1 or 2, wherein heat is reintegrated to the flash separator (2), wherein the vapor (8) is further heated by compression in a compressor or fan (21), transferred by means of a vapor conduit (22) and condensed in the external heat exchanger (6) and the heat produced by the condensing vapor is used to heat and evaporate the water in the circulation loop (3, 5, 7) and the separator (2).

4. System for regenerating kinetic hydrate inhibitor used as the sole hydrate inhibitor in a hydrate inhibitor regeneration system, system comprising:
i) a feed line for feeding a mixture of water and kinetic hydrate inhibitor into a flash separator (2);
ii) an outlet line (3) leading from the flash separator (2) to a pump (4) and a slip stream (18) for withdrawal of regenerated kinetic hydrate inhibitor;
iii) a vapor line (8) for guiding evaporated water vapor from the flash separator (2) to a condenser (9), and a line (10) connecting a downstream side of the condenser (9) with a condenser drum (11); and
iv) either a line (5) provided downstream of the pump (4) to connect the pump (4) to an external heat exchanger (6), and a return line (7) leading from the heat exchanger (6) to the flash separator (2); or an internal heat exchanger (6) or heating coils placed inside the flash separator (2);
wherein said system does not include a distillation column.

5. System for regenerating kinetic hydrate inhibitor according to claim 4, wherein an internal heat exchanger (6) or heating coils are placed inside the flash separator (2).

6. System for regenerating kinetic hydrate inhibitor according to claim 4 or 5, wherein the vapor line (8) for guiding evaporated water vapor from the flash separator (2) is in fluid communication with a compressor or fan (21), followed by a heat exchanger (6), a condenser drum (11) with two outlets (15, 12) to either a vacuum pump (16) or a pump (13) for warm condensed water (14), whereby the warm condensed water (14) is in heat exchange contact with inlet streams (1a-1c), and the return line (7) which is located downstream from the heat exchanger (6) and upstream from the flash separator (2).

7. Use of the method according to one of claims 1 to 3 or the system according to one of claims 4 to 6 for preventing hydrate formation during transport of hydrocarbons in the presence of water.

## Patentansprüche

1. Verfahren zum Regenerieren eines kinetischen Hydratihibitors, der als der einzige Hydratihibitortyp verwendet wird, in einem Hydratihibitor-Regenerationssystem, wobei das Verfahren Folgendes umfasst:
i) das Einspeisen eines Stroms, der ein Gemisch von Wasser und kinetischem Hydratihibitor enthält, in einen Flash-Abscheider (2) aus einer Speiseleitung,
ii) das Sieden des Wassers in dem Flash-Abscheider (2) mit Wärme, die in einer äußeren Umlaufschleife (3, 5, 7) mit einem äußeren Wärmetauscher (6) zugeführt wird, oder mit Wärme, die mit Hilfe eines inneren Wärmetauschers (6) oder von Heizschlangen innerhalb des Flash-Abscheiders (2) zugeführt wird, und das Ableiten des verdampften Wassers aus dem Flash-Abscheider (2) als Dampf (8),
iii) das Konzentrieren eines kinetischen Hydratihibitors in dem Flash-Abscheider (2) und in der Umlaufschleife (3, 5, 7), wodurch der kinetische Hydratihibitor wiederverwendet werden kann.

2. Verfahren nach Anspruch 1, das den Schritt des Zuführens von Wärme zu dem Flash-Abscheider (2) mit Hilfe eines inneren Wärmetauschers (6) oder von Heizschlangen innerhalb des Flash-Abscheiders (2) umfasst.

3. Verfahren nach Anspruch 1 oder 2, wobei Wärme zu dem Flash-Abscheider (2) zurückgeführt wird, wobei der Dampf (8) durch Kompression in einem Kompressor oder Gebläse (21) weiter erhitzt, mit Hilfe einer Dampfleitung (22) befördert und in dem äußeren Wärmetauscher (6) kondensiert wird und die durch den kondensierenden Dampf erzeugte Wärme verwendet wird, um das Wasser in der Umlaufschleife (3, 5, 7) und dem Flash-Abscheider (2) zu erhitzen und zu verdampfen.

4. System zum Regenerieren eines kinetischen Hydratihibitors, der als der einzige Hydratihibitortyp verwendet wird, in einem Hydratihibitor-Regenerationssystem, wobei das System Folgendes umfasst:
i) eine Speiseleitung zum Einspeisen eines Gemischs von Wasser und kinetischem Hydratihibitor in einen Flash-Abscheider (2),
ii) eine Auslassleitung (3), die von dem Flash-Abscheider (2) zu einer Pumpe (4) und einem Nachstrom (18) zum Herausziehen von regeneriertem kinetischem Hydratinhibitor führt,
iii) eine Dampfleitung (8) zum Führen von verdampftem Wasserdampf aus dem Flash-Abscheider (2) zu einem Kondensator (9) und eine Leitung (10), die eine Stromabwärtsseite des Kondensators (9) mit einer Kondensatortrommel (11) verbindet, und
iv) entweder eine Leitung (5), die stromabwärts von der Pumpe (4) bereitgestellt wird, um die Pumpe (4) mit einem äußeren Wärmetauscher (6) zu verbinden, und eine Rückführungsleitung (7), die von dem Wärmetauscher (6) zu dem Flash-Abscheider (2) führt, oder einen inneren Wärmetauscher (6) oder Heizschlangen, die innerhalb des Flash-Abscheiders (2) angeordnet sind,
wobei das System keine Destillationskolonne einschließt.

5. System zum Regenerieren eines kinetischen Hydratihibitors nach Anspruch 4, wobei ein innerer Wärmetauscher (6) oder Heizschlangen innerhalb des Flash-Abscheiders (2) angeordnet sind.

6. System zum Regenerieren eines kinetischen Hydratihibitors nach Anspruch 4 oder 5, wobei die Dampfleitung (8) zum Führen von verdampftem Wasserdampf aus dem Flash-Abscheider (2) in Fluidverbindung mit einem Kompressor oder Gebläse (21) steht, gefolgt von einem Wärmetauscher (6), einer Kondensatortrommel (11) mit zwei Auslässen (15, 12) entweder zu einer Vakuumpumpe (16) oder zu einer Pumpe (13) für warmes kondensiertes Wasser (14), wodurch das warme kondensierte Wasser (14) in Wärmeaustauschberührung mit Einlassströmen (1a-1c) und der Rückführungsleitung (7), die stromabwärts von dem Wärmetauscher (6) und stromaufwärts von dem Flash-Abscheider (2) angeordnet ist, steht.

7. Verwendung des Verfahrens nach einem der Ansprüche 1 bis 3 oder des Systems nach einem der Ansprüche 4 bis 6 zum Verhindern einer Hydratbildung während des Transports von Kohlenwasserstoffen in der Gegenwart von Wasser.

## Revendications

1. Procédé de régénération d'inhibiteur cinétique d'hydrate utilisé comme seul type d'inhibiteur d'hydrate dans un système de régénération d'inhibiteur d'hydrate, comprenant les étapes suivantes :
i) amenée d'un flot contenant un mélange d'inhibiteur cinétique d'hydrate et d'eau dans un séparateur à vaporisation instantanée (2) à partir d'une conduite d'alimentation ;
ii) ébullition de l'eau dans le séparateur à vaporisation instantanée (2) avec de la chaleur fournie dans une boucle de circulation externe (3, 5, 7) avec un échangeur thermique externe (6), ou avec de la chaleur fournie au moyen d'un échangeur thermique interne (6) ou des bobines chauffantes situées à l'intérieur du séparateur à vaporisation instantanée (2) ; et
décharge de l'eau évaporée depuis le séparateur à vaporisation instantanée (2) en tant que vapeur (8) ;
iii) concentration d'un inhibiteur cinétique d'hydrate dans le séparateur à vaporisation instantanée (2) et dans la boucle de circulation (3, 5, 7), de sorte que l'inhibiteur cinétique d'hydrate peut être réutilisé.

2. Procédé selon la revendication 1, comprenant l'étape consistant à fournir de la chaleur au séparateur à vaporisation instantanée (2) au moyen d'un échangeur thermique interne (6) ou de bobines chauffantes situées à l'intérieur du séparateur à vaporisation instantanée (2).

3. Procédé selon la revendication 1 ou 2, dans lequel la chaleur est réintégrée dans le séparateur à vaporisation instantanée (2), dans lequel la vapeur (8) est en outre chauffée par compression dans un compresseur ou une soufflante (21), transférée au moyen d'un conduit de vapeur (22) et condensée dans l'échangeur thermique externe (6) et la chaleur produite par la vapeur de condensation est utilisée pour chauffer et évaporer l'eau dans la boucle de circulation (3, 5, 7) et le séparateur (2).

4. Système pour régénérer l'inhibiteur cinétique d'hydrate utilisé comme seul inhibiteur d'hydrate dans un système de régénération d'inhibiteur d'hydrate, le système comprenant :
i) une conduite d'alimentation pour alimenter un mélange d'inhibiteur cinétique d'hydrate et d'eau dans un séparateur à vaporisation instantanée (2) ;
ii) une conduite de sortie (3) menant du séparateur à vaporisation instantanée (2) à une pompe (4) et un courant d'écoulement (18) pour l'extraction d'inhibiteur cinétique d'hydrate régénéré ;
iii) une conduite de vapeur (8) pour guider la vapeur d'eau évaporée du séparateur à vaporisation instantanée (2) à un condenseur (9), et une conduite (10) reliant un côté aval du condenseur (9) à un tambour de condenseur (11) ; et
iv) soit une conduite (5) fournie en aval de la pompe (4) pour relier la pompe (4) à un échangeur thermique externe (6), et une conduite de retour (7) menant de l'échangeur thermique (6) au séparateur à vaporisation instantanée (2) ;
soit un échangeur thermique interne (6) ou des bobines chauffantes placées à l'intérieur du séparateur à vaporisation instantanée (2) ;
dans lequel ledit système n'inclut pas de colonne de distillation.

5. Système de régénération d'inhibiteur cinétique d'hydrate selon la revendication 4, dans lequel un échangeur thermique interne (6) ou des bobines chauffantes sont placés à l'intérieur du séparateur à vaporisation instantanée (2).

6. Système de régénération d'inhibiteur cinétique d'hydrate selon la revendication 4 ou 5, dans lequel la conduite de vapeur (8) pour guider la vapeur d'eau évaporée du séparateur à vaporisation instantanée (2) est en communication à fluide avec un compresseur ou une soufflante (21), suivi par un échangeur thermique (6), un tambour de condenseur (11) avec deux sorties (15, 12) jusqu'à une pompe à vide (16) ou une pompe (13) pour l'eau chaude condensée (14), de sorte que l'eau chaude condensée (14) est en contact d'échange thermique avec des flots d'entrée (1a-1c), et la conduite de retour (7) qui est située en aval de l'échangeur thermique (6) et en amont du séparateur à vaporisation instantanée (2).

7. Utilisation du procédé selon l'une des revendications 1 à 3 ou système selon l'une des revendications 4 à 6 pour empêcher la formation d'hydrate pendant le transport d'hydrocarbures en présence d'eau.
